# EUROPÄISCHE PATENTSCHRIFT

(11) **EP 4 238 836 B1**
(45) Veröffentlichungstag und Bekanntmachung des Hinweises auf die Patenterteilung: **12.02.2025**
(21) Anmeldenummer: 22160191.7
(22) Anmeldetag: 04.03.2022
(51) Int. Cl.: B60R 21/2338

(54) **AUSLÖSBARE HALTEVORRICHTUNG**
RELEASABLE RETAINING DEVICE
DISPOSITIF DE RETENUE LIBÉRABLE

(43) Veröffentlichungstag der Anmeldung: 06.09.2023
(73) Patentinhaber: ZF Automotive Germany GmbH, 73553 Alfdorf (DE); ZF Automotive Systems Poland Sp. z.o.o., 42-200 Czestochowa (PL)
(72) Erfinder: SADOWSKI, Maciej, 42-224 Cz stochowa (PL)
(74) Vertreter: ZF LIFETEC Intellectual Property

(56) Entgegenhaltungen:
- WO-A1-2019/141676
- DE-A1- 102005 058 721
- DE-A1- 102012 007 406
- DE-A1- 102012 023 877
- US-B1- 8 602 453

## Beschreibung

Die Erfindung betrifft eine auslösbare Haltevorrichtung für ein Zugmittel eines Gassacks.

Gassäcke sind Bestandteil von Fahrzeug-Sicherheitssystemen. Häufig ist ein Zugmittel an einem Gassack befestigt. Mit dem Zugmittel kann die Entfaltung des Gassacks kontrolliert werden, indem beispielsweise das Zugmittel freigegeben wird, nachdem der Gassack zumindest teilweise mit einem Gas gefüllt wurde. Auf diese Weise lässt sich ein gewünschtes Entfaltungsverhalten des Gassacks erreichen.

Außerdem kann das Zugmittel verhindern, dass sich der Gassack im aufgeblasenen Zustand übermäßig weit in eine bestimmte Richtung entfaltet. Diese Funktion wird zum Beispiel bei adaptiven Luftsackkonzepten oder für eine aktive Gassackentlüftung angewandt.

Zur Freigabe des Zugmittels sind auslösbare Haltevorrichtungen bekannt. Beim Auslösen der Haltevorrichtung wird beispielsweise ein Blockierteil mittels einer pyrotechnischen Einrichtung aus einer Blockierstellung, in der es das Zugmittel blockiert hält, herausbewegt. Nachteilig hierbei ist, dass das Blockierteil sich nach dem Auslösen unkontrolliert in der Umgebung bewegt.

Beispielsweise ist aus der dem Oberbegriff entsprechenden DE 10 2005 058 721 A1 eine als pyrotechnische Aktuatoreinheit ausgebildete Aktuatoreinrichtung gezeigt, die ein mehrteiliges Gehäuse aufweist, wobei ein erstes Gehäuseteil einen Rastabschnitt zur Befestigung der Aktuatoreinheit in einem Bauteil aufweist und ein zweites Gehäuseteil bei einer Aktivierung eines pyrotechnischen Zünders relativ zum ersten Gehäuseteil beweglich ist.

Vor allem bei Versuchsaufbauten, bei denen ein Fahrzeug-Sicherheitssystem nicht in der serienmäßigen Fahrzeugumgebung montiert ist, müssen zusätzliche Sicherheitsvorkehrungen getroffen werden, damit das Blockierteil auch nach dem Auslösen der Haltevorrichtung am Versuchsaufbau gehalten wird und keine Beschädigung an umstehenden Gegenständen, beispielsweise Messeinrichtungen, verursachen kann. Dies ist jedoch mit einem zusätzlichen Aufwand verbunden.

Es ist daher eine Aufgabe der Erfindung, eine auslösbare Haltevorrichtung für ein Zugmittel eines Gassacks bereitzustellen, bei der zusätzliche Sicherheitsvorkehrungen entfallen können.

Diese Aufgabe wird erfindungsgemäß gelöst durch eine auslösbare Haltevorrichtung für ein Zugmittel eines Gassacks, mit einem Halter, einem Blockierteil, das in dem Halter beweglich gelagert ist und das zwischen einer Blockierstellung, in der es das Zugmittel blockiert hält, und einer Freigabestellung, in der das Zugmittel freigegeben ist, verstellbar ist, einer pyrotechnischen Einrichtung, die so mit dem Blockierteil gekoppelt ist, dass es bei Aktivierung der pyrotechnischen Einrichtung aus der Blockier- in die Freigabestellung verstellt wird, und einem Rückhaltemittel, das mit dem Blockierteil fest verbunden ist und das in der Freigabestellung des Blockierteils mit einer Rückhaltegeometrie im Halter zusammenwirkt, um das Blockierteil in seiner Freigabestellung im Halter zu halten.

Die erfindungsgemäße Haltevorrichtung hat den Vorteil, dass das Blockierteil sich nicht unkontrolliert von der Haltevorrichtung lösen kann. Dadurch müssen bei einem Versuchsaufbau keine zusätzlichen Sicherheitsvorkehrungen getroffen werden.

Die pyrotechnische Einrichtung umfasst beispielsweise eine Treibladung und einen Zünder, der wiederum einen Zündkopf und elektrische Leitungen hat.

Das Blockierteil besteht vorzugsweise aus Metall. Dadurch kann das Blockierteil hohe Querkräfte aufnehmen.

Gemäß einem Aspekt ist das Rückhaltemittel an einem Sockel gebildet, in dem das Blockierteil gehalten ist, wobei das Rückhaltemittel seitlich vom Sockel absteht. Eine Rückhaltegeometrie kann dadurch ebenfalls seitlich des Sockels angeordnet sein. Dies hat den Vorteil, dass die Rückhaltegeometrie nicht in der Bewegungsbahn des Blockierteils angeordnet ist, sodass eine Montage des Blockierteils im Halter nicht durch die Rückhaltegeometrie behindert wird.

Der Sockel ist vorzugsweise ein Kunststoffteil und das Blockierteil ist mit dem den Sockel bildenden Kunststoff im Bereich der pyrotechnischen Einrichtung umspritzt. Beispielsweise wird das Blockierteil bei der Herstellung des Sockels in eine entsprechende Werkzeugform als Einlegeteil eingelegt und umspritzt. Dadurch ist der Sockel besonders zuverlässig am Blockierteil gehalten. Zudem müssen bei der Montage der Haltevorrichtung weniger Einzelteile gehandhabt werden.

Alternativ kann das Blockierteil in den Sockel eingesteckt sein. Dadurch lassen sich das Blockierteil und der Sockel unabhängig voneinander fertigen und können von unterschiedlichen Zulieferern bezogen werden.

Das Rückhaltemittel ist beispielsweise eine Lasche, die am Sockel schräg nach außen absteht. Die Lasche bildet somit einen Haken, der sich in einer entsprechenden Rückhaltegeometrie verhaken kann, wodurch das Blockierteil besonders zuverlässig am Halter zurückgehalten werden kann.

Ein freies Ende der Lasche zeigt insbesondere in Richtung der Rückhaltegeometrie.

Gemäß einer Variante ist die Lasche flexibel. Dies ist besonders vorteilhaft im Hinblick auf eine Montage der Haltevorrichtung, insbesondere bei einem Einsetzen des Blockierteils mit dem daran befestigten Sockel in den Halter. Die Lasche lässt sich nämlich beim Einschieben des Sockels in den Halter ein Stück weit nach innen drücken, sodass eine Bewegung des Sockels bei der Montage nicht blockiert wird. Insbesondere kann die Lasche bei der Montage über die Rückhaltegeometrie hinweg bewegt werden. Wenn das Blockierteil mit dem Sockel in der Endstellung ist, die der Blockierstellung des Blockierteils entspricht, stellt sich die Lasche wieder auf und gewährleistet in diesem Zustand eine zuverlässige Rückhaltung des Blockierteils am Halter.

Der Sockel ist beispielsweise an einer Innenwandung des Halters geführt und die Innenwandung hat eine Vertiefung, die sich in Bewegungsrichtung des Blockierteils erstreckt und in welche das Rückhaltemittel zumindest ein Stück weit hineinragt. Die Vertiefung bildet somit einen Freiraum, in dem sich das Rückhaltemittel ungehindert bewegen kann, wenn die Haltevorrichtung ausgelöst wird. Somit kann das Blockierteil aus der Blockierstellung herausbewegt werden, ohne dass die Bewegung zunächst durch das Rückhaltemittel blockiert wird.

Eine Länge der Vertiefung in Bewegungsrichtung des Blockierteils definiert somit einen möglichen Verschiebeweg des Blockierteils von der Blockierstellung in die Freigabestellung.

Erfindungsgemäss ist die Rückhaltegeometrie eine Aussparung, die sich bis zu einer Außenseite des Halters erstreckt, wobei das Rückhaltemittel in einer Freigabestellung des Blockierteils in der Aussparung aufgenommen ist, insbesondere sich durch die Aussparung hindurch erstreckt. Auf diese Weise ist das Rückhaltemittel in die Aussparung eingehakt. Eine derartige Rückhaltegeometrie in Kombination mit einem entsprechenden Rückhaltemittel ist besonders vorteilhaft, da auch bei einer ungünstigen Toleranzlage das Rückhaltemittel beim Auslösen der Haltevorrichtung nicht über die Rückhaltegeometrie hinwegrutschen kann.

Die Aussparung schließt beispielsweise axial an die Vertiefung an. Das heißt, die Vertiefung geht in die Aussparung über. Wenn das Rückhaltemittel am Ende der Vertiefung angekommen ist, kann es sich somit direkt in die Aussparung hinein bewegen und es kommt zu einem Zusammenwirken von Rückhaltemittel und Rückhaltegeometrie.

Insbesondere mündet eine Eintrittsöffnung der Aussparung in die Vertiefung und ist an einer Stirnwand der Vertiefung gebildet.

Der Sockel ist vorzugsweise drehfest in dem Halter geführt. Auf diese Weise wird sichergestellt, dass das Rückhaltemittel zuverlässig mit der Rückhaltegeometrie zusammenwirkt.

Genauer gesagt ist der Sockel in einer definierten Winkelstellung im Halter geführt.

An dem Sockel ist insbesondere ein Vorsprung angeformt und der Halter hat an seiner Innenwandung eine Nut oder einen Schlitz, in der bzw. dem der Vorsprung geführt ist. Auf diese Weise ist eine Linearführung realisiert.

Der Halter hat gemäß einer Variante einen Schlitz zur Aufnahme des Zugmittels, wobei das Blockierteil beiderseits des Schlitzes in dem Halter aufgenommen ist. Dadurch ist eine stabile Lagerung der des Blockierteils in dem Halter gewährleistet, was wiederum die Aufnahme hoher Querkräfte ermöglicht.

Weitere Vorteile und Merkmale ergeben sich aus der nachfolgenden Beschreibung und aus den beiliegenden Zeichnungen, auf die Bezug genommen wird. In den Zeichnungen zeigen:
- Figur 1 eine erfindungsgemäße auslösbare Haltevorrichtung in nicht ausgelöstem Zustand in einer Schnittdarstellung,
- Figur 2 die auslösbare Haltevorrichtung aus Figur 1 in ausgelöstem Zustand,
- Figur 3 eine Detailansicht eines Rückhaltemechanismus der Haltevorrichtung,
- Figur 4 ein Blockierteil der Haltevorrichtung mit daran befestigtem Sockelteil, und
- Figur 5 einen Halter der Haltevorrichtung.

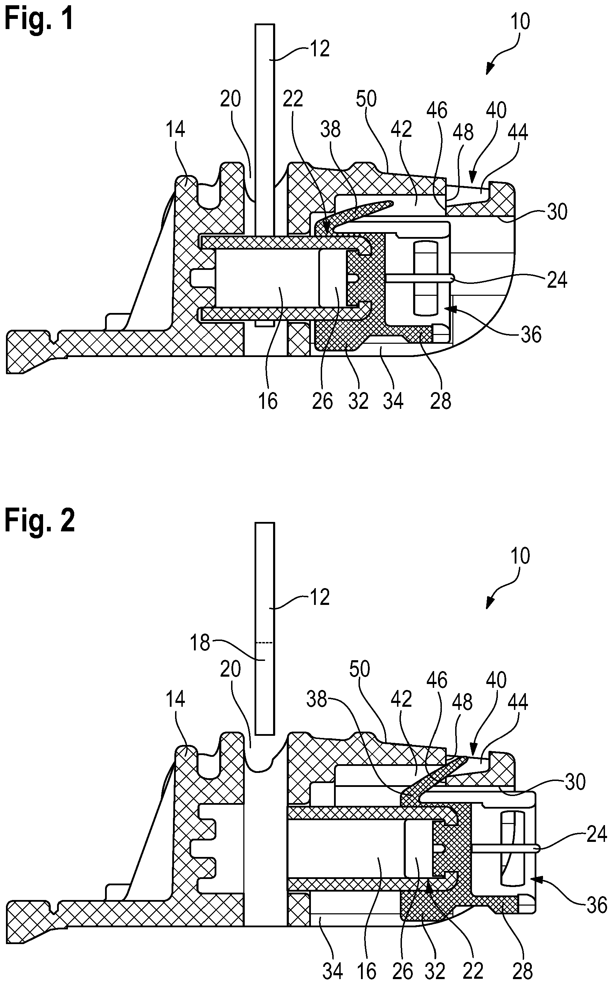

Figur 1 zeigt eine auslösbare Haltevorrichtung 10 für ein Zugmittel 12 eines Gassacks.

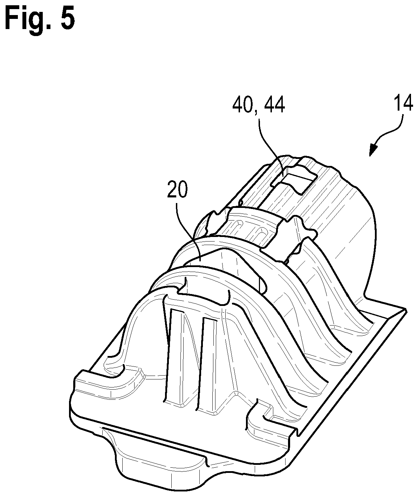

Die Haltevorrichtung 10 umfasst einen Halter 14, der auch in Figur 5 dargestellt ist. Der Halter 14 ist beispielsweise ein Kunststoff-Spritzgussteil.

In dem Halter 14 ist ein Blockierteil 16 beweglich, insbesondere linear verschiebbar gelagert. Genauer gesagt lässt sich das Blockierteil 16 von einer Blockierstellung, die in Figur 1 dargestellt ist, in eine Freigabestellung bewegen, die in Figur 2 dargestellt ist.

In der Blockierstellung hält das Blockierteil 16 das Zugmittel 12 blockiert.

Zu diesem Zweck hat das Zugmittel 12, das im Ausführungsbeispiel ein Fangband ist, eine Schlaufe 18, die in der Blockierstellung um das Blockierteil 16 gelegt ist.

Zur Aufnahme des Zugmittels 12 hat der Halter 14 einen Schlitz 20.

Das Blockierteil 16 ist im Ausführungsbeispiel eine Hülse.

Des Weiteren ist eine pyrotechnische Einrichtung 22 vorhanden, die so mit dem Blockierteil 16 gekoppelt ist, dass das Blockierteil 16 bei Aktivierung der pyrotechnischen Einrichtung 22 aus der Blockier- in die Freigabestellung bewegt wird.

Die pyrotechnische Einrichtung 22 umfasst insbesondere elektrische Leitungen 24 und einen Zündkopf 26, in dem eine pyrotechnische Treibladung aufgenommen ist.

Das Blockierteil 16 ist in einem Sockel 28 gehalten.

Genauer gesagt ist das Blockierteil 16 an einem Ende im Bereich der pyrotechnischen Einrichtung 22 mit dem den Sockel 28 bildenden Kunststoff umspritzt.

In einer alternativen Ausführungsform, die in den Figuren der Einfachheit halber nicht dargestellt ist, ist der Sockel 28 auf das Blockierteil 16 aufgesteckt.

Der Sockel 28 ist an einer Innenwandung 30 des Halters 14 geführt.

Konkret ist der Sockel 28 drehfest in dem Halter 14 geführt.

Zu diesem Zweck ist an dem Sockel 28 ein Vorsprung 32 angeformt und der Halter 14 hat an seiner Innenwandung 30 einen korrespondierenden Schlitz 34, in welchem der Vorsprung 32 geführt ist. Anstelle eines Schlitzes 34 kann der Halter 14 auch eine Nu aufweisen.

Die pyrotechnische Einrichtung 22, genauer gesagt die elektrischen Leitungen 24, sind ebenfalls abschnittsweise im Sockel 28 aufgenommen, wobei sich die Leitungen 24 durch den Sockel 28 hindurch erstrecken.

Die elektrischen Leitungen 24 sind beispielsweise durch Pins gebildet.

Zudem ist im Sockel 28 eine Aufnahme 36 für einen elektrischen Anschluss zur elektrischen Kontaktierung der Leitungen 24 gebildet.

Die Haltevorrichtung 10 umfasst zudem ein Rückhaltemittel 38, das mit dem Blockierteil 16 fest verbunden ist.

Konkret ist das Rückhaltemittel 38 integral im Sockel 28 geformt.

Des Weiteren umfasst die Haltevorrichtung 10 eine Rückhaltegeometrie 40, die integral im Halter 14 geformt ist.

Das Rückhaltemittel 38 und die Rückhaltegeometrie 40 bilden zusammen einen Rückhaltemechanismus.

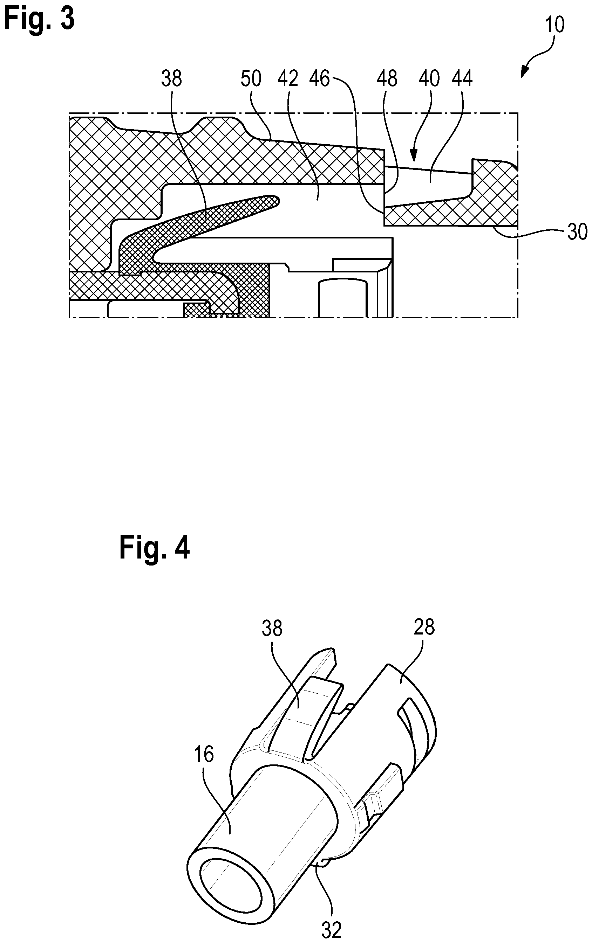

Figur 3 veranschaulicht die Haltevorrichtung 10 im Bereich des Rückhaltemittels 38 und der Rückhaltegeometrie 40 in einer Detailansicht.

Das Rückhaltemittel 38 steht seitlich vom Sockel 28 ab.

Genauer gesagt ist das Rückhaltemittel 38 eine Lasche, die am Sockel 28 schräg nach außen absteht. Dies ist besonders gut in Figur 4 zu sehen, in welcher das Blockierteil 16 mit dem Sockel 28 separat dargestellt ist.

Die Lasche ist flexibel ausgebildet.

Um eine Bewegung des Blockierteils 16 von der Blockierstellung in die Freigabestellung zu ermöglichen, ist an der Innenwandung 30 des Halters 14 eine Vertiefung 42 gebildet, die sich in Bewegungsrichtung des Blockierteils 16 erstreckt.

Das Rückhaltemittel 38 ragt zumindest ein Stück weit in die Vertiefung 42 hinein.

Die Rückhaltegeometrie 40 ist durch eine Aussparung 44 realisiert, die axial an die Vertiefung 42 anschließt.

Dabei überlappt die Aussparung 44 derart mit der Vertiefung 42, dass an einer Stirnseite 46 der Vertiefung 42 eine Öffnung 48 gebildet ist.

Ausgehend von der Öffnung 48 erstreckt sich die Rückhaltegeometrie 40, insbesondere die Aussparung 44, bis zu einer Außenseite 50 des Halters 14.

Die Aussparung 44 erstreckt sich dabei nicht bis zur Innenseite 50.

Wenn die Haltevorrichtung 10 ausgelöst wird, wird das Blockierteil 16 aufgrund des durch die pyrotechnische Einrichtung 22 erzeugten Drucks aus seiner Blockierstellung herausbewegt.

Zunächst kann sich das Blockierteil 16 ungehindert bewegen, und zwar, solange sich das Rückhaltemittel 38 in der Vertiefung 42 bewegt.

Wenn das Rückhaltemittel 38 auf die Rückhaltegeometrie 40 trifft, wird die Bewegung des Blockierteils 16 gestoppt.

In der Freigabestellung des Blockierteils 16 wirkt das Rückhaltemittel 38 mit der Rückhaltegeometrie 40 zusammen, wie es in Figur 2 veranschaulicht ist, um eine weitere Bewegung des Blockierteils 16 zu blockieren und somit das Blockierteil 16 in seiner Freigabestellung im Halter 14 zu halten.

Konkret bewegt sich das Rückhaltemittel 38 in die Aussparung 44 der Rückhaltegeometrie 40 hinein und verhakt sich darin, und zwar derart, dass sich das Rückhaltemittel 38 in der Freigabestellung des Blockierteils 16 durch die Aussparung 44 hindurch erstreckt.

## Patentansprüche

1. Auslösbare Haltevorrichtung (10) für ein Zugmittel (12) eines Gassacks, mit
einem Halter (14),
einem Blockierteil (16), das in dem Halter (14) beweglich gelagert ist und das zwischen einer Blockierstellung, in der es das Zugmittel (12) blockiert hält, und einer Freigabestellung, in der das Zugmittel (12) freigegeben ist, verstellbar ist,
einer pyrotechnischen Einrichtung (22), die so mit dem Blockierteil (16) gekoppelt ist, dass es bei Aktivierung der pyrotechnischen Einrichtung (22) aus der Blockier- in die Freigabestellung verstellt wird,
**gekennzeichnet durch** ein Rückhaltemittel (38), das mit dem Blockierteil (16) fest verbunden ist und das in der Freigabestellung des Blockierteils (16) mit einer Rückhaltegeometrie (40) im Halter (14) zusammenwirkt, um das Blockierteil (16) in seiner Freigabestellung im Halter (14) zu halten, wobei die Rückhaltegeometrie (40) eine Aussparung (44) ist, die sich bis zu einer Außenseite des Halters (14) erstreckt und das Rückhaltemittel (38) in einer Freigabestellung des Blockierteils (16) in der Aussparung (44) aufgenommen ist.

2. Haltevorrichtung (10) nach Anspruch 1, **dadurch gekennzeichnet, dass** das Rückhaltemittel an einem Sockel gebildet ist, in dem das Blockierteil gehalten ist, wobei das Rückhaltemittel seitlich vom Sockel absteht.

3. Haltevorrichtung (10) nach Anspruch 2, **dadurch gekennzeichnet, dass** der Sockel (28) ein Kunststoffteil ist und das Blockierteil (16) mit dem den Sockel (28) bildenden Kunststoff im Bereich der pyrotechnischen Einrichtung (22) umspritzt ist oder dass das Blockierteil (16) in dem Sockel (28) eingesteckt ist.

4. Haltevorrichtung (10) nach einem der Ansprüche 2 und 3, **dadurch gekennzeichnet, dass** das Rückhaltemittel (38) eine Lasche ist, die am Sockel (28) schräg nach außen absteht.

5. Haltevorrichtung (10) nach Anspruch 4, **dadurch gekennzeichnet, dass** die Lasche flexibel ist.

6. Haltevorrichtung (10) nach einem der Ansprüche 2 bis 5, **dadurch gekennzeichnet, dass** der Sockel (28) an einer Innenwandung (30) des Halters (14) geführt ist und die Innenwandung (30) eine Vertiefung (42) hat, die sich in Bewegungsrichtung des Blockierteils (16) erstreckt und in welche das Rückhaltemittel (38) zumindest ein Stück weit hineinragt.

7. Haltevorrichtung (10) nach einem der vorhergehenden Ansprüche, **dadurch gekennzeichnet, dass** das Rückhaltemittel (38) in einer Freigabestellung des Blockierteils (16) sich durch die Aussparung (44) hindurch erstreckt.

8. Haltevorrichtung (10) nach Anspruch 6 oder 7, **dadurch gekennzeichnet, dass** die Aussparung (44) axial an die Vertiefung (42) anschließt.

9. Haltevorrichtung (10) nach einem der Ansprüche 2 bis 8, **dadurch gekennzeichnet, dass** der Sockel (28) drehfest in dem Halter (14) geführt ist.

10. Haltevorrichtung (10) nach einem der Ansprüche 2 bis 9, **dadurch gekennzeichnet, dass** an dem Sockel ein Vorsprung (32) angeformt ist und der Halter (14) an seiner Innenwandung (30) eine Nut oder einen Schlitz (34) hat, in der bzw. dem der Vorsprung (32) geführt ist.

11. Haltevorrichtung (10) nach einem der vorhergehenden Ansprüche, **dadurch gekennzeichnet, dass** der Halter (14) einen Schlitz (20) zur Aufnahme des Zugmittels (12) hat.

## Claims

1. A triggerable holding device (10) for a tensioning means (12) of an airbag, comprising
a holder (14),
a locking member (16) that is movably supported in the holder (14) and that is shiftable between a locking position in which it keeps the tensioning means (12) blocked and a release position in which the tensioning means (12) is released,
a pyrotechnical device (22) that is coupled to the locking member (16) so that, when the pyrotechnical device (22) is activated, it is shifted from the locking position to the release position,
**characterized by** a restraining device (38) that is tightly connected to the locking member (16) and that interacts, in the release position of the locking member (16), with a restraining geometry (40) in the holder (14) to hold the locking member (16) in its release position in the holder (14), wherein the restraining geometry (40) is a cutout (44) which extends to an outer face of the holder (14), wherein the restraining device (38) is received in a release position of the locking member (16) in the cutout (44).

2. The holding device (10) according to claim 1, **characterized in that** the restraining device is formed on a base in which the locking member is held, the restraining device projecting laterally from the base.

3. The holding device (10) according to claim 2, **characterized in that** the base (28) is a plastic member and the plastic forming the base (28) is injection-molded around the locking member (16) in the area of the pyrotechnical device (22), or **in that** the locking member (16) is inserted in the base (28).

4. The holding device (10) according to any one of the claims 2 and 3, **characterized in that** the restraining device (38) is a tab that projects outwardly inclined on the base (28).

5. The holding device (10) according to claim 4, **characterized in that** the tab is flexible.

6. The holding device (10) according to any one of the claims 2 to 5, **characterized in that** the base (28) is guided on an inner wall (30) of the holder (14) and the inner wall (30) has a recess (42) which extends in the direction of movement of the locking member (16) and into which the restraining device (38) protrudes at least a little.

7. The holding device (10) according to any one of the preceding claims, **characterized in that** the restraining device (38) in a release position of the locking member (16) extends through the cutout (44).

8. The holding device (10) according to claim 6 or 7, **characterized in that** the cutout (44) is axially connected to the recess (42).

9. The holding device (10) according to any one of the claims 2 to 8, **characterized in that** the base (28) is guided to be rotationally fixed in the holder (14).

10. The holding device (10) according to any one of the claims 2 to 9, **characterized in that** a projection (32) is formed integrally with the base and the holder (14) includes, on its inner wall (30), a groove or a slit (34) in which the projection (32) is guided.

11. The holding device (10) according to any one of the preceding claims, **characterized in that** the holder (14) includes a slit (20) for receiving the tensioning means (12).

## Revendications

1. Dispositif de retenue déclenchable (10) pour un moyen de traction (12) d'un coussin gonflable, comprenant
un support (14),
une pièce de blocage (16) qui est montée mobile dans le support (14) et qui peut être déplacée entre une position de blocage, dans laquelle elle maintient le moyen de traction (12) bloqué, et une position de libération, dans laquelle le moyen de traction (12) est libéré,
un dispositif pyrotechnique (22) qui est couplé à l'élément de blocage (16) de telle sorte qu'il est déplacé de la position de blocage à la position de libération lorsque le dispositif pyrotechnique (22) est activé,
**caractérisé par** un moyen de retenue (38) qui est solidaire de la pièce de blocage (16) et qui, dans la position de libération de la pièce de blocage (16), coopère avec une géométrie de retenue (40) dans le support (14) pour maintenir la pièce de blocage (16) dans sa position de libération dans le support (14), pour lequel la géométrie de retenue (40) est un évidement (44), lequel s'étend jusqu'à un côté extérieur du support (14) et le moyen de retenue (38) est reçu dans l'évidement (44) dans une position de libération de la pièce de blocage (16).

2. Dispositif de retenue (10) selon la revendication 1, **caractérisé en ce que** le moyen de retenue est formé sur un socle dans lequel la pièce de blocage est maintenue, pour lequel le moyen de retenue dépasse latéralement du socle.

3. Dispositif de retenue (10) selon la revendication 2, **caractérisé en ce que** le socle (28) est une pièce en matière plastique et la pièce de blocage (16) est surmoulée avec la matière plastique formant le socle (28) dans la zone du dispositif pyrotechnique (22) ou **en ce que** la pièce de blocage (16) est enfichée dans le socle (28).

4. Dispositif de retenue (10) selon l'une des revendications 2 et 3, **caractérisé en ce que** le moyen de retenue (38) est une languette qui fait saillie vers l'extérieur en oblique sur le socle (28).

5. Dispositif de retenue (10) selon la revendication 4, **caractérisé en ce que** la languette est flexible.

6. Dispositif de retenue (10) selon l'une quelconque des revendications 2 à 5, **caractérisé en ce que** le socle (28) est guidé sur une paroi intérieure (30) du support (14) et **en ce que** la paroi intérieure (30) comporte un renfoncement (42) qui s'étend dans la direction de déplacement de la pièce de blocage (16) et dans lequel le moyen de retenue (38) pénètre au moins sur une partie.

7. Dispositif de retenue (10) selon l'une des revendications précédentes, **caractérisé en ce que** le moyen de retenue (38) s'étend à travers l'évidement (44) dans une position de déblocage de la pièce de blocage (16).

8. Dispositif de retenue (10) selon la revendication 6 ou 7, **caractérisé en ce que** l'évidement (44) se raccorde axialement au renfoncement (42).

9. Dispositif de retenue (10) selon l'une des revendications 2 à 8, **caractérisé en ce que** le socle (28) est guidé en rotation dans le support (14).

10. Dispositif de retenue (10) selon l'une des revendications 2 à 9, **caractérisé en ce qu'**une protrusion (32) est formée sur le socle et **en ce que** le support (14) comporte sur sa paroi intérieure (30) une rainure ou une fente (34) dans laquelle la protrusion (32) est guidée.

11. Dispositif de retenue (10) selon l'une quelconque des revendications précédentes, **caractérisé en ce que** le support (14) comporte une fente (20) destinée à recevoir le moyen de traction (12).
